# FASCICULE DE BREVET EUROPEEN

(11) **EP 2 308 699 B1**
(45) Date de publication et mention de la délivrance du brevet: **08.02.2012**
(21) Numéro de dépôt: 09172581.2
(22) Date de dépôt: 08.10.2009
(51) Int. Cl.: B60C 25/132, B60C 25/13

(54) **Machine de montage et de démontage de pneus**
Maschine zur Radmontage und -demontage
Machine for installing and removing tyres

(43) Date de publication de la demande: 13.04.2011
(73) Titulaire: du Quesne, Bertrand, 1030 Schaarbeek (BE)
(72) Inventeur: du Quesne, Bertrand, 1030 Schaarbeek (BE)
(74) Mandataire: De Groote, Christophe

(56) Documents cités:
- EP-A- 0 649 763
- EP-A- 0 909 667
- EP-A- 1 529 666

## Description

### Domaine de l'invention

L'invention se rapporte à une machine de montage et de démontage de pneu d'une jante de roue comportant un bâti, un plateau apte à y fixer la jante et à entraîner ladite jante en rotation et de manière centrée autour d'un axe (Y), et un levier articulé au bâti, ledit levier comportant un point de commande (A), un élément de pression conçu pour exercer une pression sur un talon et/ou un flanc du pneu en un point de travail (B) du pneu, une première articulation autour d'un point (C) pour rapprocher ou éloigner l'élément de pression de l'axe (Y), et une deuxième articulation autour d'un point (E) pour rapprocher ou éloigner l'élément de pression d'un plan central perpendiculaire à l'axe (Y) et passant par un centre (D) de la jante.

### État de la technique

De telles machines sont connues de longue date et permettent de monter et /ou de démonter un pneu d'une jante, par exemple d'une roue de voiture ou de camion ou de moto. Pour effectuer cette opération, la roue est d'abord fixée au plateau de telle sorte que son axe coïncide avec l'axe de rotation (Y) du plateau. On amène ensuite un outil de montage/démontage du pneu par-dessus la jante pour le positionner près d'un bord de la jante. On procède ensuite au démontage et/ou au montage du pneu de manière connue.

Lors de l'opération de montage ou de démontage du pneu, il est connu qu'il y a lieu de maintenir le talon du pneu dans un creux circonférentiel de la jante afin de pouvoir faire passer ledit talon par-dessus le bord de la jante au niveau de l'outil de montage/démontage.

Afin de maintenir le talon du pneu dans cette position, le brevet EP 909667 divulgue une telle machine comportant un levier articulé et actionné par un opérateur. L'opérateur commence par amener l'élément de pression dans sa position de travail (B) sur le flanc ou sur le talon du pneu. En actionnant ensuite le levier, l'opérateur peut pousser et maintenir le talon du pneu dans le creux circonférentiel de la jante pendant l'opération montage ou le démontage du pneu.

Le brevet EP 909667 divulgue également que le levier permet à l'opérateur - lors d'une opération de démontage et après avoir sorti le talon supérieur du pneu hors de la jante - de faire remonter le talon inférieur du pneu (et donc le pneu) jusqu'au bord supérieur de la jante en plaçant l'élément de pression sous le flanc inférieur du pneu et en tirant le levier vers le haut.

Des machines selon le préambule de la revendication 1 sont également connues des brevets EP 1529666 et EP 0649763.

Bien que de tels dispositifs connus fonctionnent bien, l'opérateur doit toutefois exercer une certaine force sur le levier afin que l'élément de pression soit maintenu en son point de travail et/ou pour qu'il exerce son effet sur le pneu pendant l'opération de montage ou de démontage du pneu.

### Résumé de l'invention

Pour les besoins de la présente demande, on définit les plans et volumes suivants :
- un plan radial (PR) comprenant l'axe (Y) et passant par le point (B),
- un plan tangentiel (PTA), parallèle à l'axe (Y), perpendiculaire au plan radial (PR) et comprenant le point (B),
- le plan radial (PR) et le plan tangentiel (PTA) définissent quatre quadrants spatiaux successifs (Q1,Q2,Q3,Q4) dont le premier quadrant (Q1) est celui suivant immédiatement l'axe (Y) dans le sens de rotation de la jante.

Un but de l'invention est de fournir une machine de montage et de démontage de pneus grâce à laquelle il faut exercer moins de force sur le levier pendant le montage ou le démontage du pneu.

A cette fin, la machine selon l'invention est caractérisée en ce que le point (C) se trouve dans le premier quadrant (Q1) ou dans le troisième quadrant (Q3).

En effet, lorsque le point (C) se trouve dans une telle position, la force de frottement qu'exerce le pneu sur l'élément de pression, lorsque ce dernier est dans sa position de travail (B) et lorsque le pneu est en rotation autour de l'axe (Y), résultera en une force centripète sur l'élément de pression. La force qu'il faudra exercer sur le levier pour maintenir l'élément de pression en position de travail sera ainsi réduite.

Dans un cas limite, aucune force extérieure ne devra être exercée sur le levier après que l'élément de pression ait été mis en position de travail entre le bord de la jante et le talon ou le flanc du pneu.

De préférence, la machine selon l'invention est caractérisée en ce que le point (C) se trouve dans le premier quadrant (Q1).

En effet, le levier sera ainsi uniquement mis en traction suite à ladite force de frottement, et non en compression comme ce serait le cas si le point (C) se trouvait dans le troisième quadrant (Q3). Ceci permet de réduire le risque que l'élément de pression ne se coince contre la jante et/ou d'éviter des à-coups dans le levier lorsque la roue est mise en rotation.

Pour les besoins de la présente demande, on définit par ailleurs les plans et espaces suivants lorsque la roue est montée sur le plateau :
- un premier plan transversal (PTR1) comprend un cercle formé par le bord de jante proximal du plateau ;
- un deuxième plan transversal (PTR2) comprend un cercle formé par le bord de jante distal du plateau ;
- le plan radial (PR) et le premier plan transversal (PTR1) définissent quatre quadrants spatiaux successifs (U1,U2,U3,U4) dont le premier quadrant (U1) est celui se situant du coté du centre (D) de la jante et du coté opposé à une force de frottement (F1) entre l'élément de pression (13) et le pneu lorsque la machine est en fonctionnement.

Selon une mode de réalisation particulier, la machine selon l'invention est caractérisée en ce que le point (E) se trouve dans le premier quadrant (U1) ou dans le troisième quadrant (U3) lorsque l'élément de pression est dans sa position de travail (B).

En effet, lorsque le point (E) se trouve dans une telle position, la force de frottement (F1) que le pneu en rotation exerce sur l'élément de pression lorsque ce dernier est dans une position de travail (B) sur le talon et/ou le flanc du pneu qui se trouve du coté du plateau, résultera en une force sur l'élément de pression qui sera dirigée vers le plan central (PC).
Ainsi, la force qu'il faudra exercer sur le levier pour déplacer le talon inférieur du pneu (et donc le pneu) jusqu'au niveau du bord supérieur de la jante lors d'une opération de démontage et après avoir sorti le talon supérieur du pneu hors de la jante, sera réduite.

De préférence, la machine selon l'invention est caractérisée en ce que le point (E) se trouve dans le premier quadrant (U1) lorsque l'élément de pression est dans sa position de travail (B).

En effet, le levier sera ainsi uniquement mis en traction suite à ladite force de frottement, et non en compression comme ce serait le cas si le point (E) se trouvait dans le troisième quadrant (U3). Ceci permet de réduire le risque que l'élément de pression ne se coince et/ou d'éviter des à-coups dans le levier lorsque la roue est mise en rotation.

De manière la plus préférée, la machine selon l'invention est caractérisée en ce que le point (C) se trouve dans le premier quadrant (Q1) et en ce que le point (E) se trouve dans le premier quadrant (U1) lorsque l'élément de pression est dans sa position de travail (B).

### Brève description des figures

Ces aspects ainsi que d'autres aspects de l'invention seront clarifiés dans la description détaillée de modes de réalisation particuliers de l'invention, référence étant faite aux dessins des figures, dans lesquelles :
- Fig.1: montre schématiquement une vue en perspective d'une machine selon l'invention ;
- Fig.2 et Fig.3: montrent schématiquement une vue de face de deux exemples de réalisation d'une machine selon l'invention;
- Fig.4: montre schématiquement une vue de face d'un mode de réalisation préféré d'une machine selon l'invention;
- Fig.5: montre schématiquement une vue en coupe partielle selon le plan radial (PR) d'une machine selon l'invention;
- Figs.6, 7, 8: montrent schématiquement une vue de profil de plusieurs exemples de réalisation d'une machine selon l'invention;

Les dessins des figures ne sont pas à l'échelle. Généralement, des éléments semblables sont dénotés par des références semblables dans les figures.

### Description détaillée de modes de réalisation particuliers

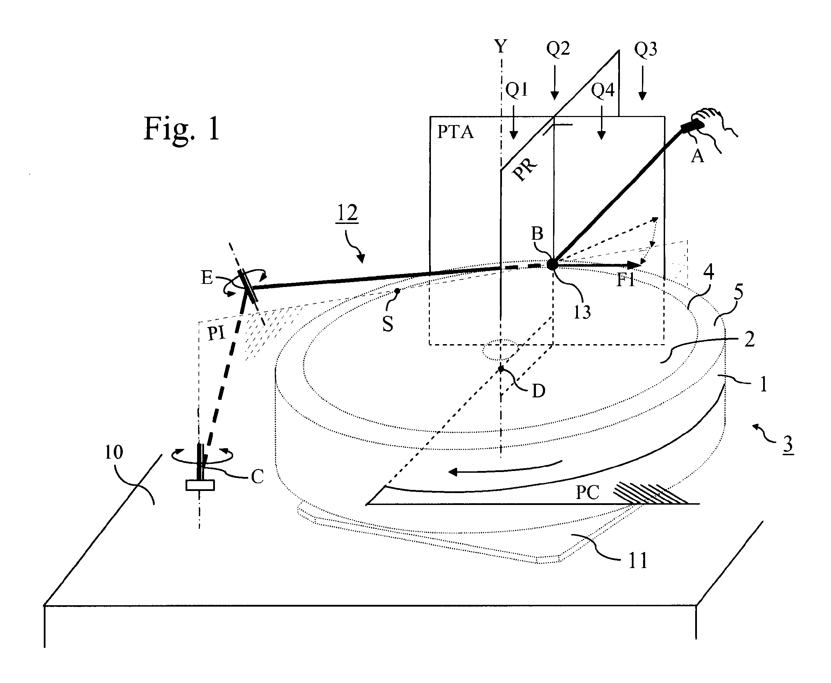

La Fig.1 montre schématiquement une vue en perspective d'un exemple de réalisation de la machine selon l'invention. Pour ne pas encombrer le dessin, cette figure ne montre que les parties importantes de la machine, les autres parties étant par ailleurs bien connues.

La machine comporte un bâti (10) fixe et un plateau (11) rotatif sur lequel peut se fixer une roue (3) de manière centrée par rapport à l'axe de rotation (Y) du plateau (11). Généralement, c'est la jante (2) de la roue qui est fixée au plateau (11), de sorte que la roue sera entraînée en rotation autour de l'axe (Y) lorsque le plateau (11) est mis en rotation autour de ce même axe.

Pour des raisons de facilité de la présente description, l'axe (Y) du plateau (11) est un axe vertical. Toutefois, l'invention ne se limite pas à une telle configuration et il faut comprendre que l'axe (Y) du plateau (11) peut avoir n'importe quelle autre orientation dans l'espace, tel que par exemple une orientation horizontale.

La machine comporte également un levier (12) relié de manière articulée au bâti (10). Dans l'exemple de la Fig.1, ledit levier (12) comporte plusieurs parties telles que décrites dans l'ordre ci-après, en partant du bâti :
- une première articulation (C) solidaire du bâti (10) ;
- un premier bras reliant la première articulation (C) à une deuxième articulation (E) ;
- un deuxième bras reliant la deuxième articulation (E) à une pièce de commande en un point de commande (A) et sur laquelle peut agir l'opérateur ou l'actionneur (ici représenté par une main) pour actionner le levier (12);
- un élément de pression (13) monté sur le deuxième bras et conçu pour exercer une pression sur un talon (6) et/ou un flanc (5) du pneu en un point de travail (B) du pneu ;

La première articulation (C) est une articulation permettant de rapprocher ou d'éloigner l'élément de pression (13) de l'axe (Y). La première articulation (C) est par exemple un pivot, dont l'axe est de préférence substantiellement parallèle à l'axe (Y).

La deuxième articulation (E) est une articulation permettant de rapprocher ou d'éloigner l'élément de pression (13) du plan central (PC). La deuxième articulation (E) est par exemple un pivot, dont l'axe est de préférence substantiellement perpendiculaire à l'axe (Y).

Dans le cas où l'axe (Y) est vertical, la première articulation (C) est par exemple un pivot d'axe vertical et la deuxième articulation (E) est par exemple un pivot d'axe horizontal.

De manière encore plus préférée, l'axe de la deuxième articulation (E) est substantiellement perpendiculaire au plan tangentiel (PTA).

Il faut comprendre que le point (A) est le point de commande, le point (B) est le point commandé, et les points (C) et (E) sont les points d'appui du levier (12).

Grâce à une telle configuration, l'opérateur peut dans un premier temps faire pivoter le levier (12) autour du point (C) pour rapprocher l'élément de pression (13) de l'axe (Y) jusqu'à ce qu'il se trouve sensiblement à la verticale de son point de travail (B). Il peut ensuite faire pivoter le bras « EA » du levier (12) autour du point (E) pour descendre ou remonter l'élément de pression (13) jusqu'à son point de travail (B) sur respectivement le flanc supérieur ou inférieur du pneu (1).

Les opérations de montage et/ou de démontage du pneu au moyen du levier (12) se déroulent ensuite comme décrit par exemple dans le brevet EP 909667.

Une fois l'opération de montage et/ou de démontage du pneu terminée, l'opérateur peut à nouveau faire pivoter le levier autour des points (C) et (E) pour dégager le levier afin de pouvoir retirer la roue du plateau.

Au lieu d'être actionné par un opérateur, le levier (12) peut être actionné par un dispositif générant une force motrice tel que par exemple un vérin ou un moteur.

La Fig.1 montre également les différents plans (plan radial:PR et plan tangentiel:PTA) et les quatre quadrants spatiaux (Q1,Q2,Q3,Q4) délimités par ces plans et tels que définis ci-dessus.

Le point (C) doit se trouver dans le premier quadrant (Q1) ou dans le troisième quadrant (Q3), préférentiellement dans le premier quadrant (Q1) comme montré à la Fig.1.

Lorsque l'élément de pression (13) est dans sa position de travail (B) sur le talon et/ou le flanc du pneu et que la roue est mise en rotation, une force de frottement (F1) se développera entre le pneu et l'élément de pression. Cette force est substantiellement tangentielle par rapport à un cercle formé par le bord de jante (4).

Ladite force de frottement peut se décomposer en trois forces, comme indiqué en pointillé sur la Fig.1. La première force est annulée par une réaction au point d'appui (C) et/ou (E). La deuxième force est dans cet exemple dirigée vers le bas et génère un couple qui aura tendance à rapprocher l'élément de pression (13) du plan central (PC) par pivotement du levier autour du point (E). La troisième force est dirigée vers l'axe (Y) et génère un couple qui aura tendance à rapprocher l'élément de pression (13) de l'axe (Y) par pivotement du levier autour du point (C) (force centripète).
Ces deux couples résultants permettront donc à l'opérateur (ou à l'actionneur) de devoir exercer moins de force sur le levier (12) pour maintenir l'élément de pression (13) dans sa position de travail pendant le montage ou le démontage du pneu (1).

La Fig.1 montre également un plan intermédiaire (PI) qui comprend le point (B) et le point (C) et qui est parallèle à l'axe (Y).
Le point (C) est de préférence positionné dans le premier quadrant (Q1) et de sorte à ce que le plan intermédiaire (PI) coupe la jante (2) en au moins un point (S), ce qui permet à la force centripète d'atteindre une certaine amplitude.

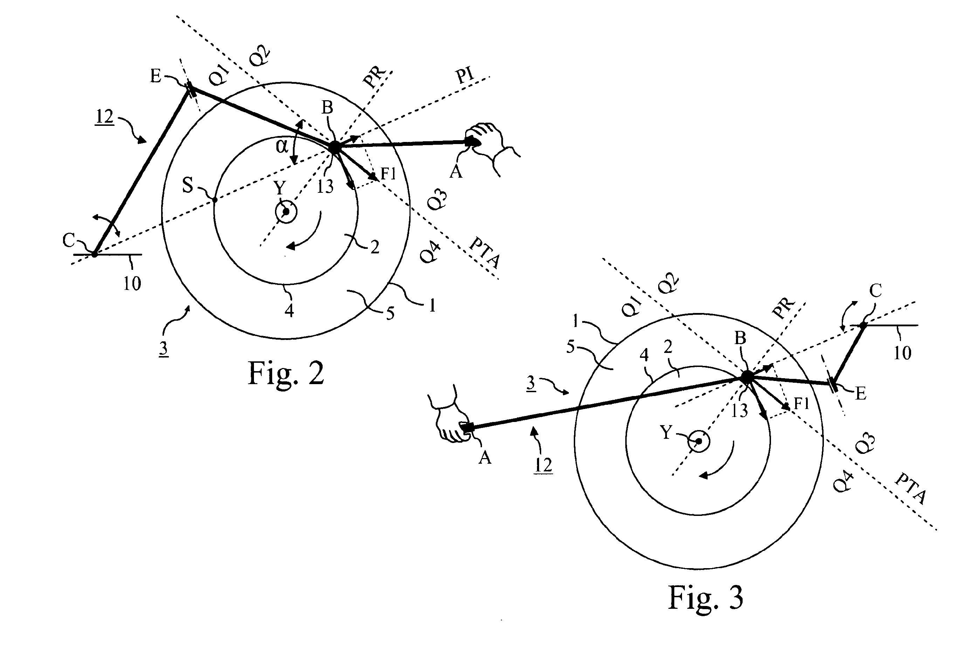

La Fig.2 et la Fig.3 montrent schématiquement une vue de face de deux exemples de réalisation d'une machine selon l'invention.

La Fig.2 montre un exemple dans lequel le point (C) est situé dans le premier quadrant (Q1), de sorte que la force de frottement (F1) se décompose en une force centripète et une force mettant le levier (12) en traction.

On voit sur la Fig.2 qu'une projection selon l'axe (Y) du segment de droite BC dans le deuxième plan transversal (PTR2) forme un angle α (alpha) avec le plan tangentiel (PTA). Lorsque le point (C) se trouve dans le premier quadrant (Q1), l'angle α (alpha) est donc compris entre 0 et 90 degrés. De préférence, l'angle α est supérieur ou égal à 20 degrés, ce qui permet à la force centripète d'atteindre une certaine amplitude. De préférence, l'angle α est inférieur ou égal à 45 degrés, ce qui permet à la force centripète de ne pas dépasser une certaine amplitude.

La Fig.3 montre un exemple dans lequel le point (C) est situé dans le troisième quadrant (Q3) (le quadrant opposé au premier quadrant (Q1)), de sorte que la force de frottement (F1) se décompose en une force centripète et une force mettant le levier (12) en compression.

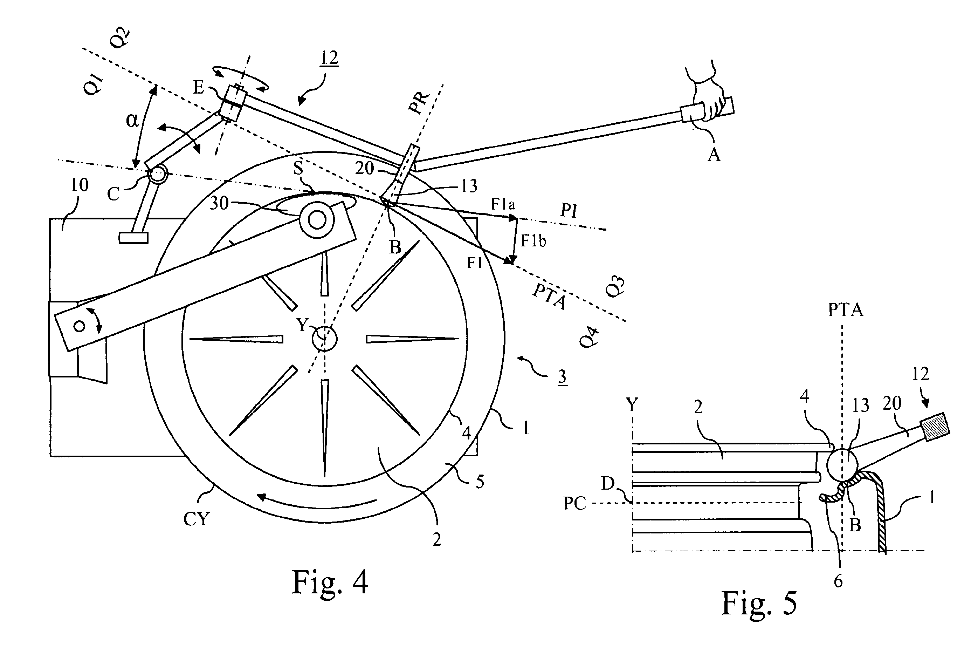

La Fig.4 montre schématiquement une vue de face d'un mode de réalisation préféré d'une machine selon l'invention, le levier (12) étant positionné de manière à ce que l'élément de pression (13) se trouve dans sa position de travail (B) entre le bord de jante (4) et le flanc supérieur (5) du pneu.

On y voit que le deuxième bras « EA» forme une ligne brisée, ce qui permet à l'opérateur de se tenir à plus grande distance de la roue (3). On y voit également que le premier bras « CE » forme un angle inférieur à 180 degrés avec le segment « EB » du deuxième bras et que le point (E) se trouve à l'extérieur d'un cercle formé par le diamètre extérieur du pneu. Dans l'espace, cela signifie que, lorsque l'élément de pression est dans sa position de travail (B), le point (E) se trouve hors d'un cylindre (CY) d'axe (Y) et comprenant la bande de roulement du pneu. Ainsi, le pneu (1) ne sera pas dans le chemin du levier lorsqu'on place l'élément de pression (13) dans sa position de travail (B) sur le talon et/ou le flanc supérieur et/ou inférieur du pneu.

Bien que non illustré, il faut aussi comprendre que les bras « CE », « EB » et/ou « BA » ne doivent pas nécessairement être droits. Il peut par exemple aussi s'agir de bras courbes.

La Fig.4 montre également que le levier (12) est conçu et relié au bâti (10) de telle sorte que le point de travail (B) de l'élément de pression (13) se situe de préférence peu après une position de travail de l'outil de montage/démontage (30) du pneu (1) (position à considérer le long du bord de jante (4) et dans le sens de rotation normal de la roue comme indiqué par la flèche sur la roue).

La Fig.5 montre schématiquement une vue en coupe partielle selon le plan radial (PR) d'une machine selon l'invention lorsque l'élément de pression (13) est en position de travail sur le talon et/ou le flanc supérieur du pneu (1). L'élément de pression (13) est de préférence de forme arrondie, par exemple une forme substantiellement sphérique. L'élément de pression (13) est de préférence dans un matériau plus tendre que l'acier afin de ne pas rayer la jante (2). De préférence, l'élément de pression (13) est monté à distance du levier (12) au moyen d'une tige (20). Ladite distance est choisie de telle sorte que le bras « EA » ne touche pas le pneu lorsque l'élément de pression (13) est dans sa position de travail (B).

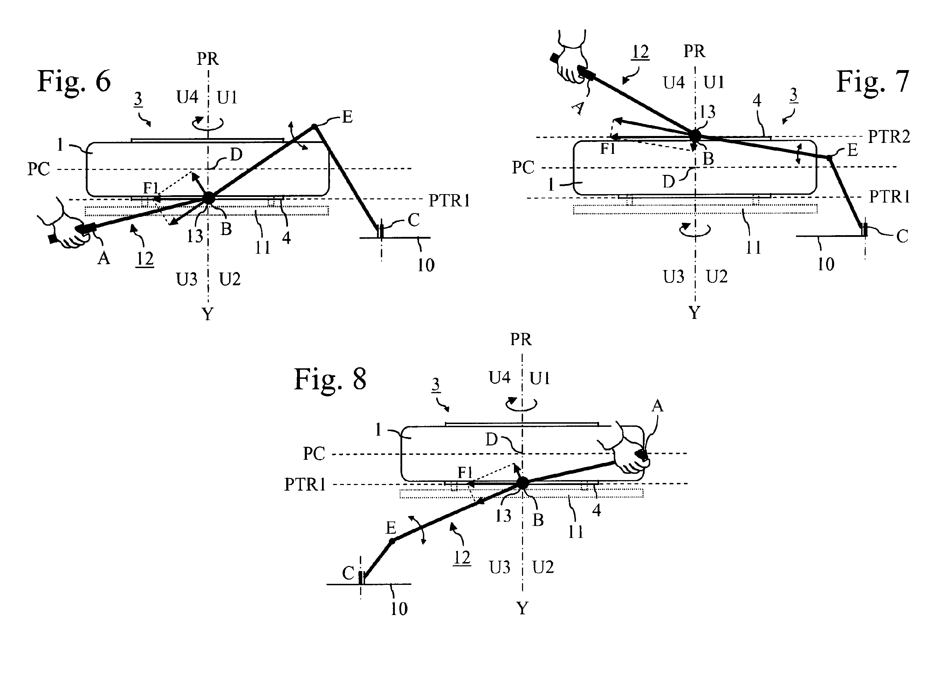

Les Figs. 6, 7 et 8 montrent schématiquement une vue de profil de plusieurs exemples de réalisation d'une machine selon l'invention.

La Fig.6 montre un exemple dans lequel l'élément de pression (13) est placé dans un position de travail (B) sur le flanc inférieur du pneu et dans lequel le point (E) est situé dans le premier quadrant (U1), de sorte que la force de frottement (F1) se décompose en une force dirigée vers le plan central (PC) (ici donc une force ascendante) et une force mettant le levier (12) en traction.

La Fig.7 montre un exemple préféré dans lequel le point (E) se situe également dans le premier quadrant (U1) lorsque l'élément de pression est dans sa position de travail (B), et dans lequel le point (E) se situe par ailleurs du coté du pneu par rapport au deuxième plan transversal (PTR2). Dans ce cas préféré, le point (E) se situe donc entre le premier plan transversal (PTR1) et le deuxième plan transversal (PTR2) lorsque l'élément de pression est dans sa position de travail (B). Ainsi, lorsque l'élément de pression (13) est placé dans un position de travail (B) sur le flanc supérieur du pneu, la force de frottement (F1) se décompose également en une force dirigée vers le plan central (PC) (ici donc une force descendante) et une force mettant le levier (12) en traction.

La Fig.8 montre un exemple dans lequel le point (E) est situé dans le troisième quadrant (U3) (le quadrant opposé au premier quadrant (U1)) lorsque l'élément de pression est dans sa position de travail (B), de sorte que la force de frottement (F1) se décompose en une force dirigée vers le plan central (PC) et une force mettant le levier (12) en compression.

Il est à noter que, dans les exemples des Figs.6, 7 et 8, le point (C) peut se trouver n'importe où et que sa position n'est donc pas limitée à celle indiquée sur lesdites figures. Néanmoins, le point (C) se trouve de préférence dans le premier quadrant (Q1) ou dans le troisième quadrant (Q3). De manière encore plus préférée, le point (C) se trouve dans le premier quadrant (Q1).

De manière encore plus préférée, le point (C) se trouve sous le premier plan transversal (PTR1) afin de pouvoir éventuellement accommoder des jantes et/ou des pneus de diamètres plus grands.

Alternativement, le point (C) et le point (E) peuvent être en ordre inversé le long du levier (12), c'est-à-dire que, partant du point de commande (A) on rencontre d'abord l'articulation autour du point (C), par exemple un pivot vertical, et ensuite l'articulation autour du point (E), par exemple un pivot horizontal, ce dernier pivot étant relié directement au bâti (10).

Selon un autre mode de réalisation de la machine selon l'invention, les articulations (C) et (E) n'en forment qu'une seule et possède au moins deux degrés de liberté en rotation, par exemple une articulation du type rotule. De préférence, cette articulation unique possède deux degrés de liberté en rotation, par exemple une articulation du type rotule à doigt ou un joint de cardan. De préférence, ladite articulation unique se trouve dans le premier quadrant (Q1) et dans le premier quadrant (U1).

La présente invention a été décrite en relation avec des modes de réalisations spécifiques, qui ont une valeur purement illustrative et ne doivent pas être considérés comme limitatifs. D'une manière générale, il apparaîtra évident pour l'homme du métier que la présente invention n'est pas limités aux exemples illustrés et/ou décrits ci-dessus. L'invention comprend chacune des caractéristiques nouvelles ainsi que toutes leurs combinaisons.
La présence de numéros de référence aux dessins ne peut être considérée comme limitative, y compris lorsque ces numéros sont indiqués dans les revendications.
L'usage des verbes « comprendre », « inclure », « comporter », ou toute autre variante, ainsi que leurs conjugaisons, ne peut en aucune façon exclure la présence d'éléments autres que ceux mentionnés.
L'usage de l'article indéfini « un », « une », ou de l'article défini « le », « la » ou « 1' », pour introduire un élément n'exclut pas la présence d'une pluralité de ces éléments.

En résumé, l'invention peut également être décrite comme suit :

Machine pour le montage et le démontage de pneu (1) d'une jante (2) de roue (3). La machine comporte un bâti (10), un plateau tournant (11) pour y fixer la roue et pour entraîner la jante en rotation autour de son axe (Y), et un outil (30) pour monter et/ou démonter le pneu de la jante. La machine comporte également un levier (12) sur lequel est fixé un élément de pression (13) pour pousser le talon (6) du pneu vers un creux circonférentiel de la jante. Le levier (12) est relié au bâti (10) et comporte une première articulation pour rapprocher ou éloigner un élément de pression (13) de l'axe (Y) et une deuxième articulation pour rapprocher ou éloigner l'élément de pression (13) d'un plan central (PC) perpendiculaire à l'axe (Y) et passant par le centre (D) de la jante (2).
La première articulation se situe à un endroit tel que la force de frottement du pneu sur l'élément de pression (13) lorsque le pneu est en rotation, résultera en une force centripète sur l'élément de pression (13), réduisant ainsi la force à exercer sur le levier (12).
La deuxième articulation se situe à un endroit tel que ladite force de frottement résultera en une force sur l'élément de pression (13) dirigée vers le plan central (PC), réduisant ainsi également la force à exercer sur le levier (12).

## Revendications

1. Machine de montage et de démontage de pneu (1) d'une jante (2) de roue (3) comportant un bâti (10), un plateau (11) apte à y fixer la jante et à entraîner ladite jante en rotation et de manière centrée autour d'un axe (Y), et un levier (12) articulé au bâti (10), ledit levier (12) comportant un point de commande (A), un élément de pression (13) pour exercer une pression sur un talon (6) et/ou un flanc (5) du pneu en un point de travail (B) du pneu, une première articulation autour d'un point (C) pour rapprocher ou éloigner l'élément de pression (13) de l'axe (Y), et une deuxième articulation autour d'un point (E) pour rapprocher ou éloigner l'élément de pression (13) d'un plan central (PC) perpendiculaire à l'axe (Y) et passant par un centre (D) de la jante, un plan radial (PR) comprend l'axe (Y) et le point (B), un plan tangentiel (PTA) est parallèle à l'axe (Y), est perpendiculaire au plan radial (PR) et comprend le point (B), le plan radial (PR) et le plan tangentiel (PTA) définissent quatre quadrants spatiaux successifs (Q1,Q2,Q3,Q4) dont le premier quadrant (Q1) est celui suivant immédiatement l'axe (Y) dans le sens de rotation de la jante (2), **caractérisé en ce que** le point (C) se trouve dans le premier quadrant (Q1) ou dans le troisième quadrant (Q3) ;

2. Machine selon la revendication 1, **caractérisée en ce que** le point (C) se trouve dans le premier quadrant (Q1);

3. Machine selon la revendication 2, dans laquelle un plan intermédiaire (PI) comprend le point (B) et le point (C) et est parallèle à l'axe (Y), **caractérisée en ce que** le plan intermédiaire (PI) coupe la jante (2) en au moins un point (S) ;

4. Machine selon l'une quelconque des revendications précédentes, **caractérisée en ce que**, lorsque la roue (3) est fixée au plateau (11) et que l'élément de pression (13) est dans sa position de travail (B), le point (E) se trouve hors d'un cylindre (CY) d'axe (Y) et comprenant la bande de roulement du pneu ;

5. Machine selon l'une quelconque des revendications précédentes, **caractérisée en ce que** l'élément de pression (13) est monté à distance du levier (12) au moyen d'une tige (20) ;

6. Machine selon l'une quelconque des revendications précédentes, dans laquelle un premier plan transversal (PTR1) comprend un cercle formé par le bord de jante proximal du plateau, le plan radial (PR) et le premier plan transversal (PTR1) définissent quatre quadrants spatiaux successifs (U1,U2,U3,U4) dont le premier quadrant (U1) est celui se situant d'un coté du centre (D) de la jante (2) et d'un coté opposé à une force de frottement (F1) entre l'élément de pression (13) et le pneu (1) lorsque la machine est en fonctionnement, **caractérisée en ce que** le point (E) se trouve dans le premier quadrant (U1) ou dans le troisième quadrant (U3) lorsque l'élément de pression est dans sa position de travail (B) ;

7. Machine selon la revendication 6, **caractérisée en ce que** le point (E) se trouve dans le premier quadrant (U1) lorsque l'élément de pression est dans sa position de travail (B);

8. Machine selon la revendication 7, dans laquelle un deuxième plan transversal (PTR2) comprend un cercle formé par le bord de jante distal du plateau, **caractérisée en ce que** le point (E) se situe entre le premier plan transversal (PTR1) et le deuxième plan transversal (PTR2);

9. Machine selon l'une quelconque des revendications précédentes, **caractérisée en ce que** le point (C) se situe sous le premier plan transversal (PTR1) ;

10. Machine selon l'une quelconque des revendications 1 à 8, **caractérisée en ce que** les points (C) et (E) sont substantiellement confondus et **en ce que** le levier (12) est articulé au bâti (10) en ce point au moyen d'une articulation ayant au moins deux degrés de liberté en rotation.

## Claims

1. Machine for fitting and removing a tire (1) from a rim (2) of a wheel (3) comprising a frame (10), a table (11) capable of having the rim attached thereto and of rotating said rim in a centered manner about an axis (Y) and a lever (12) articulated on the frame (10), said lever (12) comprising a control point (A), a pressure element (13) for exerting a pressure on a bead (6) and/or a wall (5) of the tire at a working point (B) of the tire, a first articulation about a point (C) in order to bring the pressure element (13) closer to or further from the axis (Y), and a second articulation about a point (E) in order to bring the pressure element (13) closer to or further from a central plane (PC) perpendicular to the axis (Y) and passing through a center (D) of the rim, a radial plane (PR) comprises the axis (Y) and the point (B), a tangential plane (PTA) is parallel to the axis (Y), is perpendicular to the radial plane (PR) and comprises the point (B), the radial plane (PR) and the tangential plane (PTA) define four successive spatial quadrants (Q1,Q2,Q3,Q4) of which the first quadrant (Q1) is that immediately following the axis (Y) in the direction of rotation of the rim (2), **characterized in that** the point (C) is in the first quadrant (Q1) or in the third quadrant (Q3).

2. Machine according to Claim 1, **characterized in that** the point (C) is in the first quadrant (Q1).

3. Machine according to Claim 2, in which an intermediate plane (PI) comprises the point (B) and the point (C) and is parallel to the axis (Y), **characterized in that** the intermediate plane (PI) intersects the rim (2) at at least one point (S).

4. Machine according to any one of the preceding claims, **characterized in that**, when the wheel (3) is attached to the table (11) and the pressure element (13) is in its working position (B), the point (E) is outside a cylinder (CY) with an axis (Y) and comprising the tread of the tire.

5. Machine according to any one of the preceding claims, **characterized in that** the pressure element (13) is mounted at a distance from the lever (12) by means of a rod (20);

6. Machine according to any one of the preceding claims, in which a first transverse plane (PTR1) comprises a circle formed by the rim edge proximal to the table, the radial plane (PR) and the first transverse plane (PTR1) define four successive spatial quadrants (U1,U2,U3,U4) of which the first quadrant (U1) is that situated on one side of the center (D) of the rim (2) and on one opposite side to a friction force (F1) between the pressure element (13) and the tire (1) when the machine is in operation, **characterized in that** the point (E) is in the first quadrant (U1) or in the third quadrant (U3) when the pressure element is in its working position (B).

7. Machine according to Claim 6, **characterized in that** the point (E) is in the first quadrant (U1) when the pressure element is in its working position (B).

8. Machine according to Claim 7, in which a second transverse plane (PTR2) comprises a circle formed by the rim edge which distal of the table, **characterized in that** the point (E) is situated between the first transverse plane (PTR1) and the second transverse plane (PTR2).

9. Machine according to any one of the preceding claims, **characterized in that** the point (C) is situated beneath the first transverse plane (PTR1).

10. Machine according to any one of Claims 1 to 8, **characterized in that** the points (C) and (E) are substantially indistinguishable and **characterized in that** the lever (12) is articulated on the frame (10) at this point by means of an articulation having at least two degrees of rotational freedom.

## Patentansprüche

1. Maschine zur Montage und Demontage eines Luftreifens (1) auf eine bzw. von einer Felge (2) eines Rads (3), die ein Gestell (10), eine Platte (11), an der die Felge befestigt werden und um eine Achse (Y) zentriert in Drehung versetzt werden kann, und einen am Gestell (10) angelenkten Hebel (12) aufweist, wobei der Hebel (12) einen Steuerpunkt (A), ein Druckelement (13), um einen Druck auf einen Wulst (6) und/oder eine Flanke (5) des Luftreifens an einem Arbeitspunkt (B) des Luftreifens auszuüben, ein erstes Gelenk um einen Punkt (C), um das Druckelement (13) der Achse (Y) anzunähern oder davon zu entfernen, und ein zweites Gelenk um einen Punkt (E) aufweist, um das Druckelement (13) einer Mittelebene (PC) lotrecht zur Achse (Y) und durch eine Mitte (D) der Felge verlaufend anzunähern oder davon zu entfernen, wobei eine radiale Ebene (PR) die Achse (Y) und den Punkt (B) enthält, eine tangentiale Ebene (PTA) parallel zur Achse (Y) lotrecht zur radialen Ebene (PR) ist und den Punkt (B) enthält, wobei die radiale Ebene (PR) und die tangentiale Ebene (PTA) vier aufeinanderfolgende räumliche Quadranten (Q1, Q2, Q3, Q4) definieren, von denen der erste Quadrant (Q1) derjenige ist, der direkt auf die Achse (Y) in der Drehrichtung der Felge (2) folgt, **dadurch gekennzeichnet, dass** der Punkt (C) sich im ersten Quadranten (Q1) oder im dritten Quadranten (Q3) befindet.

2. Maschine nach Anspruch 1, **dadurch gekennzeichnet, dass** der Punkt (C) sich im ersten Quadranten (Q1) befindet.

3. Maschine nach Anspruch 2, bei der eine Zwischenebene (PI) den Punkt (B) und den Punkt (C) enthält und parallel zur Achse (Y) ist, **dadurch gekennzeichnet, dass** die Zwischenebene (PI) die Felge (2) an mindestens einem Punkt (S) schneidet.

4. Maschine nach einem vorhergehenden Ansprüche, **dadurch gekennzeichnet, dass**, wenn das Rad (3) an der Platte (11) befestigt und das Druckelement (13) in seiner Arbeitsstellung (B) ist, der Punkt (E) sich außerhalb eines Zylinders (CY) mit einer Achse (Y) und den Laufstreifen des Reifens enthaltend befindet.

5. Maschine nach einem vorhergehenden Ansprüche, **dadurch gekennzeichnet, dass** das Druckelement (13) in Abstand zum Hebel (12) mittels einer Stange (20) montiert wird.

6. Maschine nach einem vorhergehenden Ansprüche, bei der eine erste Querebene (PTR1) einen Kreis enthält, der vom zur Platte proximalen Felgenrand gebildet wird, wobei die radiale Ebene (PR) und die erste Querebene (PTR1) vier aufeinanderfolgende räumliche Quadranten (U1, U2, U3, U4) definieren, von denen der erste Quadrant (U1) derjenige ist, der sich auf einer Seite der Mitte (D) der Felge (2) und auf einer einer Reibungskraft (F1) zwischen dem Druckelement (13) und dem Reifen (1) entgegengesetzten Seite befindet, wenn die Maschine in Betrieb ist, **dadurch gekennzeichnet, dass** der Punkt (E) sich im ersten Quadranten (U1) oder im dritten Quadranten (U3) befindet, wenn das Druckelement in seiner Arbeitsstellung (B) ist.

7. Maschine nach Anspruch 6, **dadurch gekennzeichnet, dass** der Punkt (E) sich im ersten Quadranten (U1) befindet, wenn das Druckelement in seiner Arbeitsstellung (B) ist.

8. Maschine nach Anspruch 7, bei der eine zweite Querebene (PTR2) einen Kreis enthält, der vom zur Platte distalen Felgenrand geformt wird, **dadurch gekennzeichnet, dass** der Punkt (E) sich zwischen der ersten Querebene (PTR1) und der zweite Querebene (PTR2) befindet.

9. Maschine nach einem vorhergehenden Ansprüche, **dadurch gekennzeichnet, dass** der Punkt (C) sich unter der ersten Querebene (PTR1) befindet.

10. Maschine nach einem Ansprüche 1 bis 8, **dadurch gekennzeichnet, dass** die Punkte (C) und (E) im Wesentlichen zusammenfallen, und dass der Hebel (12) an das Gestell (10) an diesem Punkt mit Hilfe eines Gelenks angelenkt ist, das mindestens zwei Drehfreiheitsgrade hat.
